Europäisches Patentamt

European Patent Office

Office européen des brevets

(11) Publication number: **0 062 481**
**B1**

## EUROPEAN PATENT SPECIFICATION

(45) Date of publication of patent specification: **23.07.86**

(51) Int. Cl.⁴: **E 21 B 7/00,** F 03 G 7/04

(21) Application number: **82301665.4**

(22) Date of filing: **30.03.82**

(54) **Conduits to be used in association with ocean thermal energy conversion systems.**

(30) Priority: **31.03.81 US 249580**

(43) Date of publication of application:
**13.10.82 Bulletin 82/41**

(45) Publication of the grant of the patent:
**23.07.86 Bulletin 86/30**

(84) Designated Contracting States:
**FR GB NL**

(56) References cited:
**FR-A-1 104 873**
**GB-A-2 076 448**
**US-A-2 048 677**
**US-A-3 736 744**
**US-A-4 176 985**
**US-A-4 255 933**

(73) Proprietor: **MCDERMOTT INCORPORATED**
**P.O. Box 60035 1010 Common Street**
**New Orleans Louisiana 70160 (US)**

(72) Inventor: **Green, William Lawrence**
**528 Valence Street**
**New Orleans Louisiana 70115 (US)**
Inventor: **Landers, Edward, A., Jr.**
**161 Country Club Drive**
**Covington Louisiana 70433 (US)**
Inventor: **Calkins, Dennis Earl**
**3805 Houma Boulevard**
**Metairie Louisiana 70002 (US)**
Inventor: **Gray, Daniel W.**
**3933 Tall Pines Street**
**New Orleans Louisiana 70114 (US)**

(74) Representative: **Cotter, Ivan John et al**
**D. YOUNG & CO. 10 Staple Inn**
**London WC1V 7RD (GB)**

# Description

This invention relates to conduits to be used in association with ocean thermal energy conversion systems or the like.

The high cost and dwindling supply of fossil fuels have created intense interest in alternative sources of energy. One such alternative energy source involves the utilisation of the temperature difference between warm surface seawater and cooler subsurface seawater. This general concept is known as ocean thermal energy conversion or "OTEC".

In one popular version of an OTEC power plant, warm surface seawater is used to vapourise a working fluid. The vapour is used to drive turbine generators which produce electricity. After the vapour has passed through the turbines, cool subsurface seawater is used to condense the vapour, thereby completing the working fluid cycle.

The cool subsurface seawater required for this process is located roughly 500 to 1000 metres (1500 to 3000 feet) below the water surface. In many OTEC power plants, it is necessary to bring large quantities of this subsurface seawater to the surface. To accomplish this, it is envisioned that a long pipe commonly referred to as a "cold water conduit" will be used, the conduit extending down from the surface to a depth of roughly 500 to 1000 metres (1500 to 3000 feet). It is anticipated that the conduit must be approximately 1.5 to 40 metres (5 to 120 feet) in diameter for OTEC powerplants of from 1 to 400 megawatts, respectively.

The need for such a huge conduit presents several severe problems. The conduit must be fabricated of a material which is strong enough to withstand the tremendous dynamic loads imposed by waves as well as the large static load presented by the weight of such a long vertical conduit. Other problems involve the method of installing such a conduit and maintaining its position with respect to an OTEC plant or the like located on the surface.

French Patent No. FR—A—1 104 873 is concerned with providing a conduit that can extend down into a body of water to a substantial depth and is concerned more particularly with providing such a conduit that, unlike a conduit in the form of a rigid pipe, is resistant to damage from loads imposed by waves and the like. To this end, FRA—A—1 104 873 provides such a conduit in the form of plural flexible pipes of small section.

According to a first aspect of the present invention there is provided a method of creating a conduit that extends down into a body of water and can be used in association with an ocean thermal energy conversion system or the like, characterised by drilling at least one passageway through an underwater land formation, the passageway being directionally drilled so that the top of the passageway is located on an underwater land shelf and the bottom of the passageway is located on an underwater land slope, and repeatedly introducing and then detonating at least one explosive charge in the passageway at progressively high elevations.

As will be evident, since the conduit is formed in an underwater land formation as set forth above, rather than being formed by a pipe or pipes, the present method solves the problems of resistance to dynamic loading imposed by waves, resistance to static loading problems imposed by weight, and maintaining the position of the conduit.

According to a second aspect of the invention there is provided an ocean thermal energy system characterised by a power plant located at the surface of a body of water and a cold water conduit through which cool subsurface water is, in use, brought up to the plant, wherein the cold water conduit has been formed in an underwater land formation by a method according to the first aspect of the invention.

A preferred method embodying the invention and described hereinbelow circumvents the need for solving the aforementioned problems involving the cold water conduit to be used in association with ocean thermal energy conversion systems and the like. The preferred method involves the drilling of a passageway through an underwater land formation, which passageway can be used as the cold water conduit of an ocean thermal energy conversion system. More specifically, in the preferred method, the passageway is drilled through an underwater land formation which is adjacent to the intersection of a land shelf and a land slope, the passageway extending from the land shelf to the land slope. The cross-sectional area of the passageway is increased by detonating explosive charges within the passageway at progressively higher elevations.

The invention will now be further described, by way of illustrative and non-limiting example, with reference to the accompanying drawings, in which:

Figure 1 is an elevational view in cross-section of a type of underwater land formation in which a method embodying the invention can be practiced;

Figure 2 is an elevational view of the land formation shown in Figure 1 with a drilling rig in position and a passageway extending through the land formation;

Figure 3 is an elevational view of the land formation and rig shown in Figure 2 with a plurality of passageways and a template beneath the rig;

Figure 4 is a view taken along a line 4—4 in Figure 3;

Figure 5 is an elevational view of the template;

Figure 6 is a plan view of the template shown in Figure 5;

Figure 7 is an elevational view of the land formation shown in Figure 3 with explosive charges positioned inside the passageways;

Figure 8 is a view of the land formation shown in Figure 7 upon detonation of the charges;

Figure 9 is a view of the land formation shown in Figure 8 after the explosion has created a conduit;

Figure 10 is a view taken along a line 10—10 in Figure 9;

Figure 11 is a view of a land formation shown in Figure 10 with explosive charges in place near the conduit; and

Figure 12 is a view of the land formation shown in Figure 11 with the conduit extending completely through the land formation.

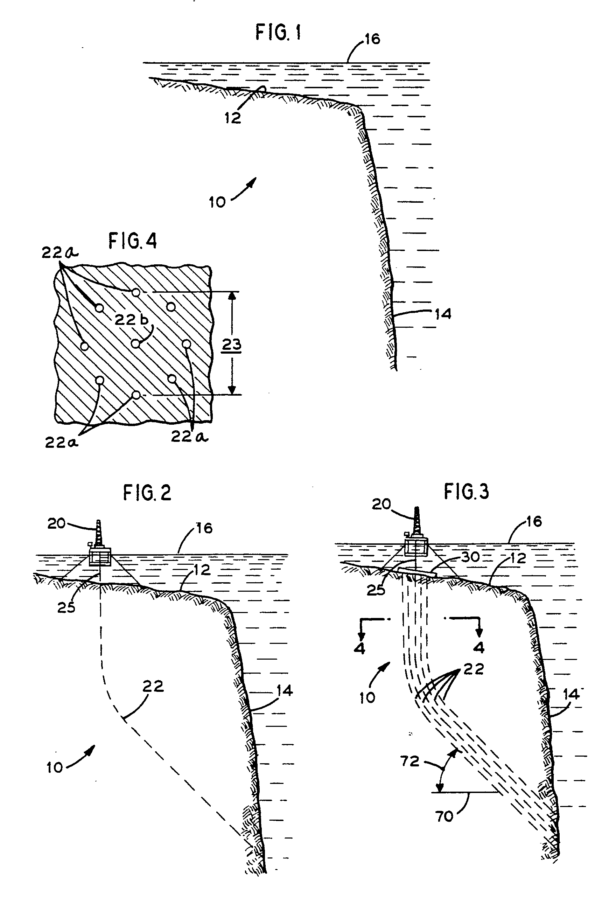

Figure 1 shows a type of underwater land formation 10 in which the present invention can be worked. The underwater land formation 10 is located adjacent to the intersection of an underwater land shelf 12 and an underwater land slope 14. The underwater land shelf 12 and slope 14 could be a continental shelf and a continental slope, respectively. The shelf 12 and slope 14 could instead be an island shelf 12 and an island slope 14 or any other similar underwater land shelf and underwater land slope.

Preferably, the slope 14 has an orientation ranging from vertical to roughly 45° from the vertical. Further, the shelf 12 preferably lies roughly 80 to 120 metres (250 to 350 feet) below the water surface 16. The underwater land formation 10 preferably comprises hard, compacted, rock-like material.

Figure 2 shows a mobile marine drilling rig 20 positioned above the underwater land formation 10. A drilling member 25 of the rig 20 is used to drill at least one passageway 22 through the land formation 10. Generally, the passageway 22 is drilled substantially vertically for a distance and is then drilled directionally towards the slope 14 using well known directional drilling techniques. When the drilling has been completed, the passageway 22 extends from the shelf 12 to the slope 14.

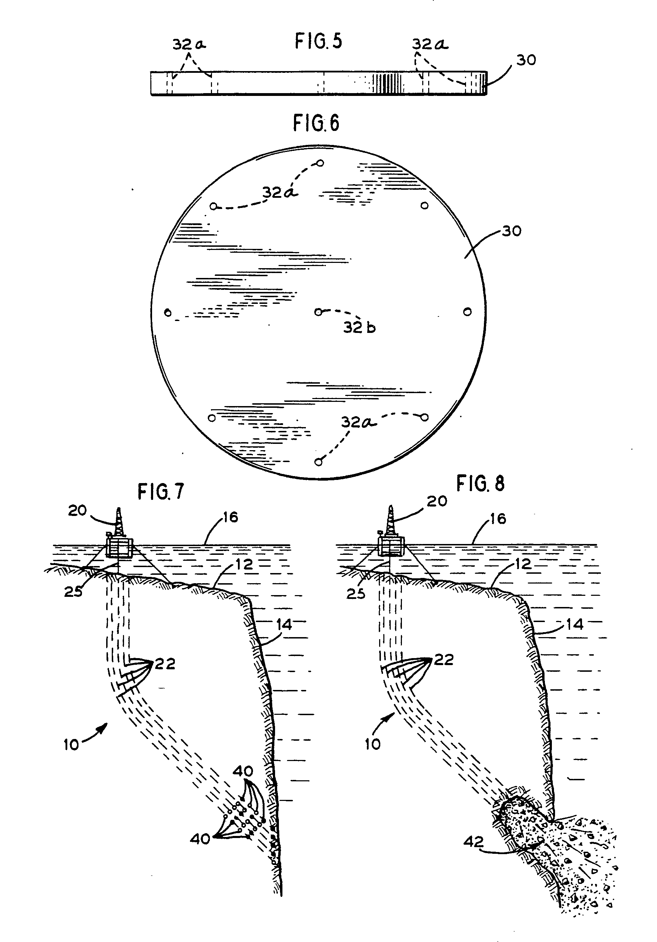

Preferably, as shown in Figure 3, a plurality of substantially parallel passageways 22 are drilled through the land formation 10. The passageways 22 are drilled with the aid of a template 30. The template 30, shown in Figures 5 and 6, has a plurality of holes 32 comprising circumferential holes 32a and a central hole 32b.

The template 30 is used by placing it on the shelf 12 at the desired location where the drilling of the passageways 22 is to occur. The holes 32 in the template 30 are arranged so as to complement the desired arrangement of the passageways 22 relative to each other.

A preferred arrangement of the passageways 22 is shown in Figure 4. The passageways 22 are drilled such that a cross-section taken anywhere along the length of the passageways reveals a circular pattern wherein circumferential passageways 22a surround a central passageway 22b. The circle formed by the circumferential passageways 22a has a diameter designated by the numeral 23.

The passageways 22 are preferably drilled sequentially, beginning with the central passageway 22b. The passageway 22b is started by inserting the tip of the drilling member 25 through the central hole 32b of the template 30. After the passageway 22b has been completely drilled from the shelf 12 to the slope 14, the first of the circumferential passageways 22a may be started.

The circumferential passageway 22a is started by inserting the tip of the drilling member 25 through a desired one of the circumferential holes 32a of the template 30. Drilling is then commenced and the circumferential passageway 22a is drilled, substantially parallel to the passageway 22b, from the shelf 12 to the slope 14. Existing state-of-the-art drilling techniques allow the central passageway 22b to be used as a reference for maintaining substantial parallelism between the central passageway 22b and the circumferential passageway 22a which·is being drilled.

Using the template 30 to locate the desired starting points for the remaining passageways 22a, the drilling process is repeated for each passageway 22a to be drilled.

The relative arrangement, number, and spacing of the holes 32 in the template 30, and thus the relative arrangement, number, and spacing of the passageways 22, will vary depending upon the soil conditions present in the land formation 10.

Referring now to Figure 7, after all the passageways 22 have been completely drilled, a first group of explosive charges 40 is placed in at least one and preferably all of the passageways 22. As shown in Figure 7, the first group of charges 40 is positioned at the lower end of the passageways 22. The charges 40 are then detonated.

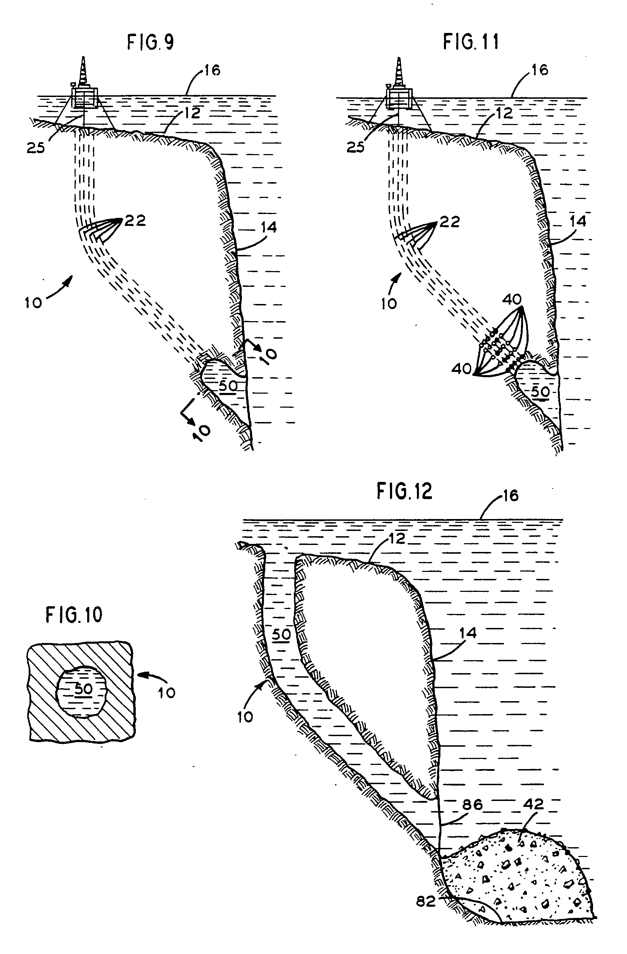

The resulting blast causes that portion of the underwater land formation 10 which is adjacent to the charges 40 in the passageways 22 to fragment, as illustrated in Figure 8. The fragmented rubble 42, due to the combined forces of gravity and the explosion, falls from the underwater land formation 10, thereby creating a tunnel or conduit 50 as shown in Figures 9 and 10.

The diameter of the conduit 50 is roughly equal to the dimension 23 shown in Figure 4. The length of the conduit 50 created by detonating the group of explosive charges 40 depends upon several factors. These factors, which will vary according to the soil conditions present in the underwater land formation 10, include the number, placement and spacing of the explosive charges 40 along the length of the passageways 22.

The process of introducing and then detonating groups of explosive charges 40 in the passageways 22 is repeated at progressively higher elevations. For example, Figure 11 shows a second group of charges 40 which have been positioned near the upper end of the conduit 50 and are ready to be detonated, thereby increasing the length of the conduit 50. This process is repeated until the conduit 50 extends from the slope 14 completely through the underwater land formation 10 to the shelf 12, as illustrated in Figure 12.

The orientation of the conduit 50 in the underwater land formation 10 is substantially the same as that of the plurality of passageways 22 considered collectively. As shown in Figure 12, the conduit 50 can be utilised as a cold water conduit for an OTEC power plant, for example a form of OTEC plant such as that outlined in the introduction to this description.

The step of introducing the explosive charges 40 into the passageways 22 is preferably accomplished by lowering the charges from the top of the passageways down through the passageways to the desired location where detonation is to occur. The drilling rig 20 which was used to drill the passageways 22 can be utilised to lower the charges down the passageways 22. It is recommended, however, that the rig 20 be moved a safe distance away from the area when detonating the highest level of explosive charges, in case some of the rubble is thrust upwardly.

The slope of the conduit 50 from the horizontal, at all points along the length of the conduit 50, is preferably greater than the angle of repose of the rubble 42 created by detonating the explosive charges. This ensures that gravitational forces will cause the rubble 42 to tumble completely out of the conduit 50, leaving a clear, unobstructed conduit.

Since the spatial orientation of the conduit 50 is substantially the same as that of the passageways 22, the passageways are preferably drilled such that at all points along their length, especially along the points of least passageway inclination, the angle formed between a passageway 22 and the horizontal is greater than the angle of repose of the rubble 42 created by detonating the explosive charges 40.

As an illustration of this, reference should be made to Figure 3 where an angle 72 is shown as being formed between a passageway 22 and a horizontal line 70 drawn across the passageway at a point of least passageway inclination. The angle of repose of the rubber 42 expected to be produced by the disclosed method is roughly 35°. Therefore, to ensure that the rubble 42 will tumble out of the conduit 50, the angle 72 should be at least 35° and preferably not less than 45°.

The minimum acceptable value of the angle 72 may vary, depending ultimately upon the angle of repose of the rubble 42 created by the detonation of the charges 40. Several factors influence the angle of repose, including the explosive force of the charges 40 and the distance between adjacent charges as positioned in the passageways 22.

The force of the charges 40 and the distance between adjacent charges are determined in large part by the nature of the underwater land formation 10 from which the rubble 42 is derived. Preferably, core samples are taken from the land formation 10 prior to or during the initial phase of drilling the passageways 22. Using well known principles of the earth sciences, the core samples will facilitate the calculation of the various factors described hereinabove. The core samples will also provide information concerning the general advisability of attempting to practice the method disclosed herein in the underwater land formation 10 from which the samples were taken.

Referring now to Figure 12, the underwater land formation 10, in addition to being composed of material which is hard and stable enough to allow the disclosed method to be practiced, should also be situated such that there is sufficient clearance between the bottom opening 86 of the conduit 50 and the seabed 82. This clearance should be such that the accumulated pile of rubble 42 will not block the conduit opening 86. Preferably, the opening 86 is located approximately 500 to 1000 metres (1500 to 3000 feet) below the water surface 16.

## Claims

1. A method of creating a conduit (50) that extends down into a body of water and can be used in association with an ocean thermal energy conversion system or the like, characterised by drilling at least one passageway (22) through an underwater land formation (10), the passageway (22) being directionally drilled so that the top of the passageway is located on an underwater land shelf (12) and the bottom of the passageway is located on an underwater land slope (14), and repeatedly introducing and then detonating at least one explosive charge (40) in the passageway (22) at progressively higher elevations.

2. A method according to claim 1, wherein the introduction of the explosive charge or charges (40) is accomplished by lowering the charge or charges from the top of the passageway (22) down through the passageway to the location where the charge is to be detonated.

3. A method according to claim 1 or claim 2, wherein the passageway (22) is drilled so that an angle (72) formed between the passageway and the horizontal (70) is greater than the angle of repose of rubble (42) created by detonating the explosive charge or charges (40).

4. A method according to claim 1, claim 2 or claim 3, wherein a plurality of substantially parallel passageways (22) are drilled through the underwater land formation, the passageways being arranged with respect to one another in a substantially circular pattern.

5. An ocean thermal energy system characterised by a power plant located at the surface of a body of water and a cold water conduit (50) through which cool subsurface water is, in use, brought up to the plant, wherein the cold water conduit (50) has been formed in an underwater land formation (10) by a method according to any one of the preceding claims.

## Patentansprüche

1. Verfahren zur Herstellung einer Leitung (50), die sich abwärts in eine Wassermasse erstreckt und in Verbindung mit einem Ozean-Wärmeenergie-Umwandlungssystem oder dergleichen verwendet werden kann, dadurch gekennzeichnet, daß man wenigstens einen Durchgang (22) durch eine Landformation (10) unter Wasser bohrt, wobei der Durchgang (22) richtungsmäßig so gebohrt wird, daß das obere Ende des Durchgangs auf einem Landschelf (12) unter Wasser und das untere Ende des Durchgangs auf einem Landabhang (14) unter Wasser liegt, und wiederholt wenigstens eine Sprengladung (40) in den Durchgang (22) an zunehmend höheren Stellen einführt und dann sprengt.

2. Verfahren nach Anspruch 1, bei dem die Einführung der Sprengladung oder Sprengladungen (40) in der Weise erfolgt, daß man die Ladung oder Ladungen von dem oberen Ende des Durchganges (22) abwärts durch den Durchgang bis zu der Stelle, wo die Ladung gesprengt werden soll, hinabläßt.

3. Verfahren nach Anspruch 1 oder Anspruch 2, bei dem der Durchgang (22) so gebohrt wird, daß ein Winkel (72), der zwischen dem Durchgang und der Horizontalen (70) sich bildet, größer als der Ruhewinkel des durch die Sprengung der Sprengladung oder Sprengladungen (40) erzeugten Gerölls (42) ist.

4. Verfahren nach Anspruch 1, Anspruch 2 oder Anspruch 3, bei dem mehrere im wesentlichen parallele Durchgänge (22) durch die Landformation unter Wasser gebohrt werden, wobei die Durchgänge zueinander in einem im wesentlichen kreisförmigen Muster angeordnet sind.

5. Ozean-Wärmeenergiesystem, gekennzeichnet durch eine Kraftwerk, das an der Oberfläche einer Wassermasse liegt, und eine Kaltwasserleitung (5), durch welche kaltes Oberflächenwasser bei der Verwendung zu dem Kraftwerk hinaufgebracht wird, wobei die Kaltwasserleitung (50) in einer Landformation (10) unter Wasser nach einem Verfahren gemäß einem der vorausgehenden Ansprüche gebildet wurde.

## Revendications

1. Procédé de réalisation d'un conduit (50) descendant jusqu'au sein d'une masse d'eau et pouvant servir en association avec un système de conversion d'énergie thermique océanique ou analogue, caractérisé en ce qu'on fore au moins un passage (22) à travers une formation de terrain sous-marine (10), le passage (22) étant ménagé par forage dirigé de façon que son sommet soit situé sur une plate-forme sous-marine (12) et que sa base soit située sur un talus sous-marin (14), et l'on introduit puis fait détoner de manière répétée au moins une charge explosive (40) dans le passage (22) à des niveaux de plus en plus élevés.

2. Procédé selon la revendication 1, dans lequel l'introduction de la charge ou des charges explosives (40) est effectuée en faisant descendre la ou les charges depuis le sommet du passage (22) à travers le passage jus'qu'à l'endroit où l'on doit faire dètoner la charge.

3. Procédé selon la revendication 1 ou 2, dans lequel on fore le passage (22) en sorte que l'angle (72) fait entre le passage et l'horizontale (70) soit supérieur à l'angle de. talus des déblais (42) obtenus en faisant détoner la ou les charges explosives (40).

4. Procédé selon la revendication 1, 2 ou 3, dans lequel on fore une série de passage (22) sensiblement parallèles à travers la formation sous-marine, les passages étant disposés les uns par rapport aux autres en un motif sensiblement circulaire.

5. Système à énergie thermique océanique caractérisé par une centrale de production d'énergie située à la surface d'une masse d'eau et un conduit d'eau froide (50) à travers lequel de l'eau subsuperficielle froide est amenée, en service, à la centrale, dans lequel le conduit d'eau froide (50) a été ménagé dans une formation sous-marine (10) par un procédé selon l'une quelconque des revendications précédentes.

0 062 481

FIG.1

FIG.4

FIG.2

FIG.3

1

FIG. 5

FIG. 6

FIG. 7

FIG. 8

FIG.9

FIG.11

FIG.10

FIG.12